# EUROPEAN PATENT APPLICATION

(11) **EP 4 668 386 A1**
(43) Date of publication of application: **24.12.2025**
(21) Application number: 24877556.1
(22) Date of filing: 11.10.2024
(51) Int. Cl.: H01M 10/04, G01L 5/00

(54) **COMPRESSING DEVICE, CAPABLE OF REAL-TIME MONITORING OF COMPRESSING FORCE, FOR FORMATION OF SECONDARY BATTERY, AND COMPRESSING METHOD THEREOF**

(30) Priority: 11.10.2023 KR 20230134790
(71) Applicant: LG Energy Solution, Ltd., Seoul 07335 (KR)
(72) Inventor: RHEE, Jung Han, Daejeon 34122 (KR)
(74) Representative: Goddar, Heinz J.
(86) International application number: PCT/KR2024/015403
(87) International publication number: WO 2025/080021

(57) **Abstract**

Disclosed are a pressing apparatus for secondary battery formation capable of monitoring pressing force in real time such that pressing for formation can be performed while monitoring the contact area between a pressing plate and a battery in real time in order to solve a problem in which lithium is precipitated due to a change in pressing uniformity because the contact area of the battery is not confirmed during a formation process, which is one of secondary battery manufacturing processes, and a pressing method thereof.

## Description

### [Technical Field]

This application claims the benefit of priority to Korean Patent Application No. 2023-0134790 filed on October 11, 2023, the disclosure of which is incorporated herein by reference in its entirety.

The present invention relates to a pressing apparatus for secondary battery formation capable of monitoring pressing force in real time and a pressing method thereof, and more particularly to a pressing apparatus for secondary battery formation capable of monitoring pressing force in real time such that pressing for formation can be performed while monitoring the contact area between a pressing plate and a battery in real time in order to solve a problem in which lithium is precipitated due to a change in pressing uniformity because the contact area of the battery is not confirmed during a formation process, which is one of secondary battery manufacturing processes, and a pressing method thereof.

### [Background Art]

In general, secondary batteries may be classified into a cylindrical secondary battery, a prismatic secondary battery, and a pouch-shaped secondary battery depending on the shape thereof. Thereamong, the pouch-shaped secondary battery is attracting much attention because the appearance of the pouch-shaped secondary battery is formed using a pouch cladding member made of a multilayer film including a metal layer (foil) and synthetic resin layers formed on an upper surface and a lower surface of the metal layer by coating, which can significantly reduce the weight of the battery compared to the cylindrical secondary battery or the prismatic secondary battery, which uses a metal can, whereby it is possible to reduce the weight of the battery and to change the battery so as to have various shapes.

In the pouch-shaped secondary battery, an electrode assembly is received in a stacked form, wherein the electrode assembly has an electrode tab and an electrode lead connected thereto, and the electrode lead protrudes from the pouch cladding member. The electrode lead is electrically connected to an external device by contact to receive power from the external device.

A battery cell manufacturing process may be divided into three processes, including an electrode manufacturing process, an assembly process, and a formation process.

The electrode manufacturing process refers to a process of manufacturing an electrode by mixing materials necessary to manufacture a positive electrode and a negative electrode at an appropriate ratio, coating aluminum foil with a positive electrode mixture for the positive electrode, coating copper foil with a negative electrode mixture for the negative electrode, pressing the same to a predetermined thickness through a roll press to flatten the same, and slitting the same so as to have a size corresponding to the size of the electrode.

In addition, the assembly process is a process in which a stack & folding process in which, after notching to remove unnecessary parts from the electrode, the positive electrode, a separator, and the negative electrode are alternately stacked and then folded several times according to the capacity of the battery or a winding process in which the electrodes and the separator are overlapped and wound is performed, the same is packaged using an aluminum film packaging material, an electrolyte is injected, and sealing is performed under vacuum.

In addition, the formation process is a process of activating the assembled battery cell while repeatedly charging and discharging the battery cell and performing a degassing process to discharge gas generated from the battery cell during formation. In the formation process, a formation jig is used to press the battery cell.

A pouch-shaped secondary battery is manufactured through a cell assembly process and a battery formation process, and in the battery formation step, a secondary battery cell is mounted on a charging and discharging apparatus and is charged and discharged under conditions required for formation. As such, a process of performing predetermined charging and discharging using the charge and discharge apparatus for activation of the battery is called a formation process.

During the battery cell manufacturing process as described above, or after manufacture, thickness deviation may occur between the central part and the tab part of the battery cell due to sliding or taper of an end of the electrode, resulting in pressure unevenness during the process using the formation jig, and the adhesion between the positive electrode and the negative electrode in a bi-cell may be reduced, whereby a gap may be formed therebetween, resulting in lithium precipitation.

Therefore, there is a need to develop technology for monitoring whether uniform pressure is applied to the battery cell when the battery cell is pressed by the formation jig used in the formation process during the battery cell manufacturing process.

Japanese Patent Application Publication No. 2022-104809 discloses a configuration including a second end plate and a pressing plate located at both ends of a tray configured to receive a battery cell and a partition located in the tray. However, this publication discloses that a pressure sensing device is not individually formed on a cell plate located between the cells but is formed in the center region of each cell assembly, which is different from the real-time pressing force monitoring technology of the present invention.

Chinese Patent Application Publication No. 217387245 discloses a configuration that determines a pressure situation in real time through a pressure sensing device. However, this configuration is different from the configuration in which a thin-film type electronic pressure sheet is provided for each of components corresponding to cell plates to monitor the cell contact area at all times in a formation process of the present invention.

Korean Patent Application Publication No. 2023-0053970 discloses a configuration in which, each of a pair of pressing plates disposed with a secondary battery therebetween in a formation process includes a body part and an outer part, and a silicone pad is formed on each of the pressing plates. However, this configuration is different from the technical configuration of an electronic pressure sheet for monitoring pressing force of the present invention.

Korean Patent Application Publication No. 2023-0102104 discloses a configuration for checking pressure distribution in real time including an electronic pressure sheet, wherein pressure information detected by the electronic pressure sheet is displayed on a lamination state indicator (monitor). However, this configuration is a configuration for checking pressure information of a substrate deposition apparatus, which is different from the formation process of the present invention.

Therefore, it is necessary to develop a pressing apparatus for secondary battery formation capable of monitoring pressing force in real time such that pressing for formation can be performed while monitoring the contact area between a pressing plate and a battery in real time in order to solve a problem in which lithium is precipitated due to a change in pressing uniformity because the contact area of the battery is not confirmed during a formation process, which is one of secondary battery manufacturing processes, and a pressing method thereof.

### (Prior Art Documents)

(Patent Document 0001) Japanese Patent Application Publication No. 2022-104809
(Patent Document 0002) Chinese Patent Application Publication No. 217387245
(Patent Document 0003) Korean Patent Application Publication No. 2023-0053970
(Patent Document 0004) Korean Patent Application Publication No. 2023-0102104

### [Disclosure]

### [Technical Problem]

The present invention has been made in view of the above problems, and it is an object of the present invention to provide a pressing apparatus for secondary battery formation capable of monitoring pressing force in real time such that pressing for formation can be performed while monitoring the contact area between a pressing plate and a battery in real time in order to solve a problem in which lithium is precipitated due to a change in pressing uniformity because the contact area of the battery is not confirmed during a formation process, which is one of secondary battery manufacturing processes, and a pressing method thereof.

### [Technical Solution]

A pressing apparatus for secondary battery formation according to the present invention to accomplish the above object includes a plurality of pressing plates, a first main plate and a second main plate disposed on the outermost sides of the pressing plates, respectively, the first main plate and the second main plate being configured to press a battery received between the pressing plates, and a driving shaft fastening the first main plate and the second main plate to each other and configured to move the first main plate and the second main plate in an X direction, wherein a thin-film type electronic pressure sheet is located between the plurality of pressing plates.

In addition, each of the plurality of pressing plate may include a main body having an area corresponding to the Y-direction and Z-direction area of the battery, wherein the area is configured to face a surface of the battery, a silicone pad attached to an outer surface of the main body, and the thin-film type electronic pressure sheet attached to an outer surface of the silicone pad.

In addition, each of the plurality of pressing plates may include a main body having an area corresponding to the Y-direction and Z-direction area of the battery, wherein the area is configured to face a surface of the battery, the silicone pad attached to an outer surface of the main body, and an electronic pressure sheet attached to an outer surface of the silicone pad.

In addition, the pressing plate may further include a heating pad configured to heat the battery.

In addition, the heating pad may be formed on an outer surface of any one of the main body, the silicone pad, and the thin-film type electronic pressure sheet.

In addition, the plurality of pressing plates may be arranged in the X direction and may be configured to press or release the battery while moving in the X direction allowing the distance therebetween to decrease or increase.

In addition, the thin-film type electronic pressure sheet may be a plurality of thin-film type electronic pressure sheets, and the pressing apparatus may include a data socket provided on one side of each of the plurality of thin-film type electronic pressure sheets, the data socket being configured to collect and transmit pressure information to a data acquisition (DAQ) unit.

In addition, the pressing apparatus may include a central processing unit configured to display the magnitude of a pressing force applied to the thin-film type electronic pressure sheet.

In addition, the pressing apparatus may include a motor configured to transmit a pressing force to the first main plate and the second main plate, the first main plate and the second main plate being interlocked to the driving shaft, a gearbox connected to the driving shaft and the motor, the gearbox being configured to induce forward or reverse rotation of the driving shaft through rotation, and a load cell configured to perform pressing using force of the motor until the pressing force reaches a predetermined level.

In addition, the battery may be a plurality of batteries, and the pressing apparatus may include a battery introduction unit configured to grip the plurality of batteries and to dispose the plurality of batteries between the pressing plates.

A pressing force measurement method for secondary batteries according to the present invention to accomplish the above object includes a first step of attaching a plurality of thin-film type electronic pressure sheets to outer surfaces of a plurality of pressing plates, respectively, a second step of disposing a plurality of batteries between the plurality of pressing plates, a third step of pressing the plurality of the batteries while moving the first main plate and the second main plate in an X direction, a fourth step of performing charging and discharging once while maintaining the third step, and a fifth step of monitoring a pressing force applied to the thin-film type electronic pressure sheets in the fourth step, wherein, in the fifth step, a battery of the plurality of batteries different in the pressing force applied to the thin-film type electronic pressure sheets from other batteries of the plurality of batteries, is classified into a rework group.

In addition, each of the pressing plates may include a main body having an area corresponding to the Y-direction and Z-direction area of the battery, wherein the area is configured to face a surface of the battery, a silicone pad attached to an outer surface of the main body, and the thin-film electronic pressure sheet attached to an outer surface of the silicone pad.

The present invention may provide various combinations of the above solving means.

### [Advantageous Effects]

A pressing apparatus for secondary battery formation capable of monitoring pressing force in real time according to the present invention and a pressing method thereof have the effect of reducing the movement distance of each plate by monitoring pressing force in real time while pressing a plurality of batteries in both directions, thereby reducing the pressure deviation between the batteries.

In addition, conventionally, a pressure sheet is used to check the contact area for pressing the battery, but verification is possible once when the pressing apparatus is initially set up, whereby continuous monitoring is not possible. The present invention has the effect of remedying the above problem.

In addition, during a pressing process for formation of a plurality of batteries, batteries with uneven degrees of pressing are sorted and reworked after the pressing process is completed, whereby it is possible to improve uniformity of pressing.

### [Description of Drawings]

FIG. 1 is a view showing the configuration of a pressing apparatus for battery formation including an electronic pressure sheet according to an embodiment of the present invention before a pressing process.
FIG. 2 is a view showing the configuration of the pressing apparatus for battery formation including the electronic pressure sheet according to the embodiment of the present invention during the pressing process.
FIG. 3 is a view showing the configuration of a channel of a pressing plate of a pressing apparatus for formation including an electronic pressure sheet according to a first embodiment of the present invention.
FIG. 4 is a view showing the configuration of a channel of a pressing plate of a pressing apparatus for formation including an electronic pressure sheet according to a second embodiment of the present invention.
FIG. 5 is a view showing the configuration of a channel of a pressing plate of a pressing apparatus for formation including an electronic pressure sheet and a heating pad according to a third embodiment of the present invention.
FIG. 6 is a graph showing the results of measurement of pressing force as a function of the electronic pressure sheet application time.
FIG. 7 is a table showing the results of an experiment of reliability and repeatability in measurement of pressing force using the electronic pressure sheet.
FIG. 8 shows the results of measurement of consistency of pressing force measurement values between 9-channel sensors.
FIG. 9 shows the results of measurement of consistency of pressing force measurement values between 36-channel sensors.
FIG. 10 is a photograph showing the appearance change of the electronic pressure sheet before and after a pressure durability experiment.
FIG. 11 is a view showing the configuration of a pressing apparatus for formation including a battery introduction unit according to a fourth embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that the other elements may be further included unless mentioned otherwise.

In addition, any limitations or additions to any embodiment described herein are not limited to a specific embodiment but are equally applicable to other embodiments.

Also, in the description of the invention and the claims of the present application, singular forms are intended to include plural forms unless mentioned otherwise.

Embodiments of the present invention will be described in detail with reference to the drawings.

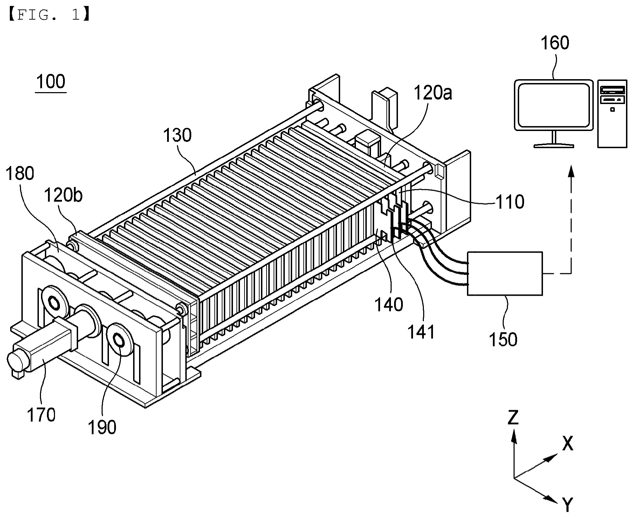

FIG. 1 is a view showing the configuration of a pressing apparatus for battery formation including an electronic pressure sheet according to an embodiment of the present invention before a pressing process.

The pressing apparatus 100 for secondary battery formation includes a plurality of pressing plates 110, a first main plate 120a and a second main plate 120b disposed on the outermost sides of the pressing plates 110, respectively, the first main plate and the second main plate being configured to press a battery received between the pressing plates 110, and a driving shaft 130 configured to fasten the first main plate 120a and the second main plate 120b to each other and to move the first main plate 120a and the second main plate 120b in an X direction, wherein a thin-film type electronic pressure sheet 140 is provided between the pressing plates 110.

The battery received between the pressing plates 110 may be a pouch-shaped battery cell. For example, the pouch-shaped battery cell may be a pouch-shaped unit cell, wherein an electrode assembly having a positive electrode/separator/negative electrode structure is mounted in a cladding member made of a laminated sheet in a state of being connected to electrode leads formed outside the cladding member. The electrode leads may extend outwardly of the sheet in the same direction or in opposite directions.

The pressing plates 110 are not limited in shape as long as transmission of pressing force to the battery is possible. The pressing plates 110 may be shaped so as to correspond to the shape of a battery inserted in a Y direction as a longitudinal direction.

The pressing plates 110 have a certain space formed therebetween such that a plurality of pouch-shaped batteries is received in the longitudinal direction, wherein the space has a roughly hexahedral shape. A frame may include a bottom surface and sidewalls formed on opposite sides of the bottom surface so as to support the batteries received therein. The sidewalls may be formed on one side and the other side in a direction in which the plurality of battery cells is received. Furthermore, the frame may be configured to have a structure in which the top of the frame is open such that the battery cell can be withdrawn and mounted.

Each of the pressing plates 110 preferably has a rectangular shape.

It is generally known that, when the position of one end of a secondary battery is 300 mm from the center (origin 0) of the secondary battery, a sharp pressure drop occurs at a point of 200 mm. In addition, it is known that a sharp pressure drop occurs at opposite ends of a secondary battery for which a formation process has been performed by a conventional secondary battery charging and discharging apparatus.

Therefore, the pressing plate 110 may have a shape in which the thickness thereof increases from the center in a direction toward each edge.

The pressing apparatus 100 for secondary battery formation includes a motor 170 configured to transmit pressing force to the first main plate 120a and the second main plate 120b, which are interlocked to the driving shaft 130, a gearbox 180 connected to the driving shaft 130 and the motor 170, the gearbox being configured to induce forward or reverse rotation of the driving shaft through rotation, and a load cell 190 configured to perform pressing using the force of the motor 170 until the pressing force reaches a predetermined level.

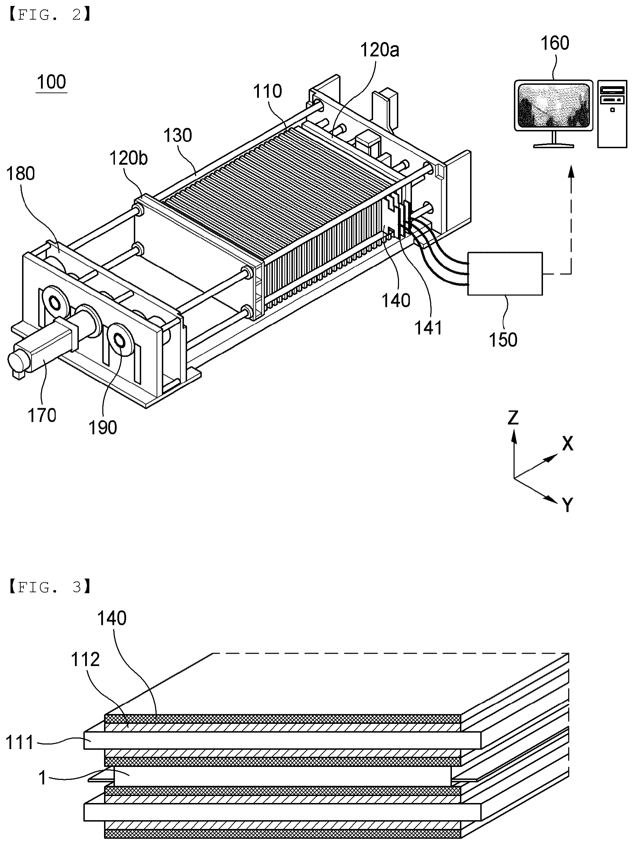

FIG. 2 is a view showing the configuration of the pressing apparatus for battery formation including the electronic pressure sheet according to an embodiment of the present invention during the pressing process.

A plurality of batteries is received between the pressing plates 110 formed between the first main plate 120a and the second main plate 120b, and the pressing plates 110 are disposed so as to be movable along the driving shaft 130.

At this time, each of the plurality of pressing plates 110 has a structure in which a fastening hole is formed in a region thereof fastened to the driving shaft 130, wherein the fastening hole has a diameter greater than the diameter of the driving shaft.

In another example, a fixing plate disposed in a central region of the driving shaft 130 may be included. Furthermore, a first pressure sensor and a second pressure sensor may be disposed on opposite surfaces of the fixing plate, respectively.

The fixing plate may be formed in plural so as to be disposed at regular intervals relative to the center of the driving shaft 130.

In yet another example, pressing plates 110 may be disposed on opposite sides of the fixing plate so as to movable along the driving shaft 130.

In a specific example, a first pressure sensor and a second pressure sensor are disposed between one pressing plate 110 and the fixing plate and between the other pressing plate 110 and the fixing plate.

In this case, each of the first pressure sensor and the second pressure sensor may have a structure in which a fastening hole is formed in a region thereof fastened to the driving shaft, and the fastening hole may have a diameter greater than the diameter of the driving shaft.

Furthermore, a power generation unit connected to one end of the driving shaft 130 to transmit rotational force to the driving shaft 130 may be included.

In one example, the first main plate 120a and the second main plate 120b press the plurality of battery cells received in the frame, and are disposed on the outermost sides of the plurality of batteries. For example, if 36 batteries are disposed in the frame, the first main plate 120a may be disposed in front of a first battery cell and the second main plate 120b may be disposed in front of a 36th battery cell. In addition, the first main plate 120a and the second main plate 120b press opposite surfaces of the plurality of batteries by driving of the driving shaft 130.

Each of the first main plate 120a and the second main plate 120b may be made of a metal material having high mechanical rigidity. In addition to the metal material, each of the first main plate 120a and the second main plate 120b may be made of a material having high mechanical rigidity, such as reinforced plastic, reinforced ceramic, or reinforced glass.

FIG. 3 is a view showing the configuration of a channel of a pressing plate of a pressing apparatus for formation including an electronic pressure sheet according to a first embodiment of the present invention.

In addition, the pressing plate may include a main body 111 having an area corresponding to the Y-direction and Z-direction area of the battery 1, the main body being configured to face the surface of the battery, a silicone pad 112 attached to an outer surface of the main body 111, and an electronic pressure sheet 140 attached to an outer surface of the silicone pad 112.

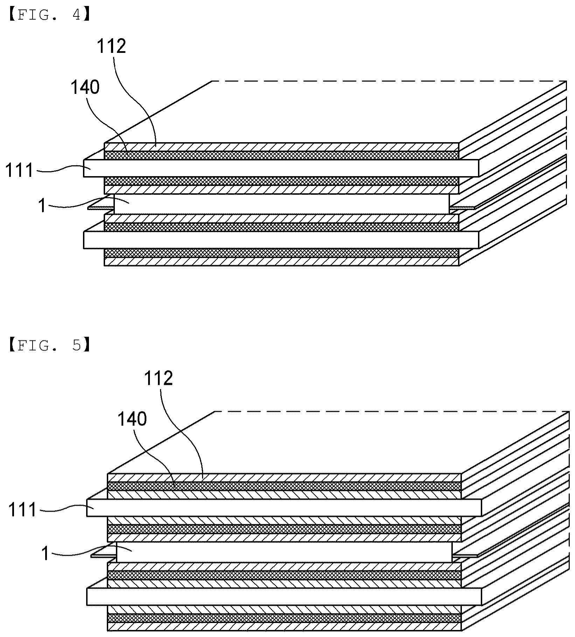

FIG. 4 is a view showing the configuration of a channel of a pressing plate of a pressing apparatus for formation including an electronic pressure sheet according to a second embodiment of the present invention.

In addition, the pressing plate may include a main body 111 having an area corresponding to the Y-direction and Z-direction area of the battery 1, the main body being configured to face the surface of the battery, an electronic pressure sheet 140 attached to an outer surface of the main body 111, and a silicone pad 112 attached to an outer surface of the electronic pressure sheet 140.

FIG. 5 is a view showing the configuration of a channel of a pressing plate of a pressing apparatus for formation including an electronic pressure sheet and a heating pad according to a third embodiment of the present invention.

In addition, the pressing plate may further include a heating pad configured to heat the battery 1.

The heating pad is formed on at least one surface of the pressing plate to provide heat to the pressing plate.

Silicone pads are formed on opposite surfaces of the pressing plate on which the heating pad is formed to press a secondary battery.

In addition, the heating pad may be formed on an outer surface of any one of the main body, the silicone pad, and the electronic pressure sheet.

In addition, the pressing plates may be arranged in the X direction and may press or release the battery while moving in the X direction such that the distance therebetween decreases or increases.

In addition, a data socket 141 configured to collect and transmit pressure information to a data acquisition (DAQ) unit 150 may be provided on one side of each of the plurality of electronic pressure sheets 140.

Since one or more electronic pressure sheets are formed on opposite surfaces of the pressing plate, a plurality of pressing force data may be continuously generated during the pressing process.

Therefore, a device configured to collect and monitor the pressing force data generated for each of the secondary batteries located between the pressing plates is required.

A DAQ unit 150 configured to collect data generated by each electronic pressure sheet is formed, and a data socket 141 configured to transmit pressing force data generated by each electronic pressure sheet 140 to the DAQ unit 150 is required.

The DAQ unit 150 collects the pressing force data generated for the battery 1 through a plurality of channels. When the number of batteries received in the pressing apparatus for formation during one pressing process is 36, the number of pressing force data collection channels of the DAQ unit 150 is preferably 36.

In addition, a central processing unit 160 configured to display the magnitude of the pressing force applied to the electronic pressure sheet may be included.

The pressing force data collected by the DAQ unit 150 may be transmitted to the central processing unit 160. The central processing unit may include software configured to image the pressing force data, an image display device configured to display the imaged pressing force data, and a transmission device configured to transmit the pressing force data to the outside.

The pressing force data of individual batteries accumulated in real time during the pressing process of the pressing apparatus for formation may be used to check the pressing condition of the batteries generated through the pressing process.

### (Example 1)

An experiment of repeatability in measurement of pressing force using an electronic pressure sheet was performed.

The pressing force condition was 2,837 kgf, the number of repetitions was 1,055, and the experimental environment was 30 seconds of pressing and 90 seconds of standby using a JIG 02-27 channel apparatus. Before and after the experiment, the pressing force was measured using a flat plate scale five times and compared.

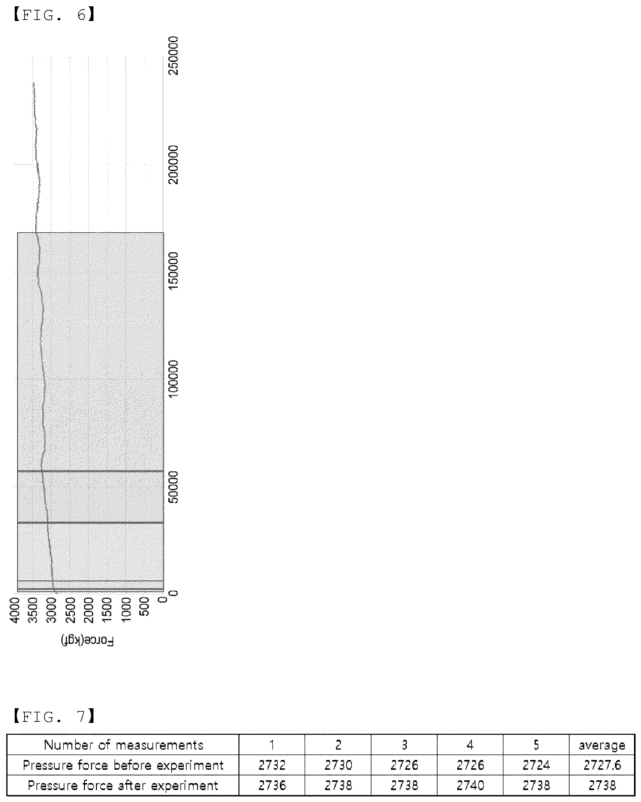

FIG. 6 is a graph showing the results of measurement of pressing force as a function of the time of applying the electronic pressure sheet.

It can be seen that the pressing force value increases as the number of measurements increases over time, which increases the measurement error. The measurement error rate ranges from a minimum of 2.25% to a maximum of 22.37%.

### (Example 2)

An experiment of reliability and repeatability in measurement of pressing force using an electronic pressure sheet was performed.

The number of sensors used was 10, and JIG 01-9CH and JIG 01-36CH were used as experimental channels. The number of pressings was 5 times for each sensor. The pressing force was 2,837 kgf. Before and after the experiment, the pressing force was measured using a flat plate scale five times and compared.

FIG. 7 is a table showing the results of an experiment of reliability and repeatability in measurement of pressing force using the electronic pressure sheet.

The average pressing force before the experiment was 2,727.6 kgf, and the average pressing force after the experiment was 2,738 kgf, which means that the change in pressing force after the experiment was 11 kgf and the error rate was 0.4%.

### (Example 3)

Consistency of pressing force between sensors using an electronic pressure sheet was experimentally determined.

The number of sensors used was 10, and JIG 01-9CH and JIG 01-36CH were used as experimental channels. The number of pressings was 5 times for each sensor. The pressing force was 2,837 kgf. Before and after the experiment, the pressing force was measured using a flat plate scale five times and compared.

After calibration, consistency was checked at 2,837 kgf.

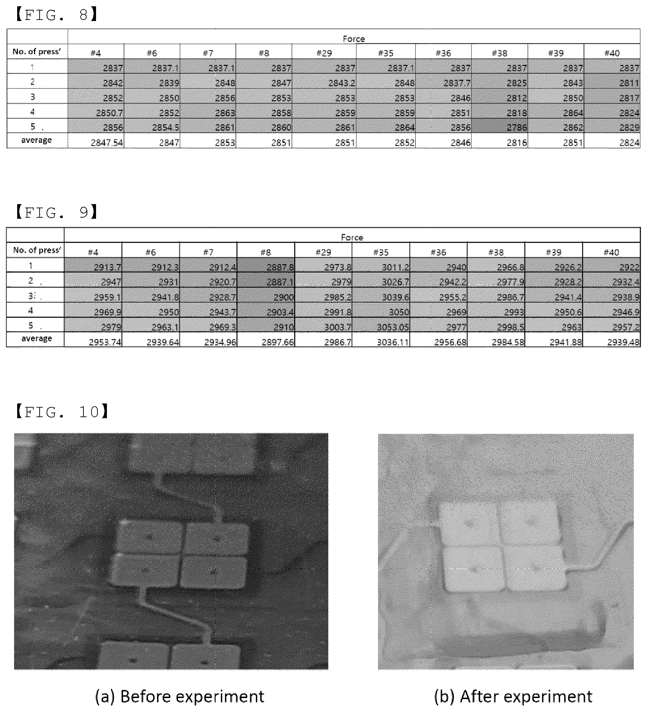

FIG. 8 shows the results of measurement of consistency of pressing force measurement values between 9-channel sensors. The minimum measurement value is 2,786 kgf, the maximum measurement value is 2,864 kgf, and the average is 2,843.7 kgf, which means that the maximum deviation from the average (%RAD) of 2.03% and the relative standard deviation (%RSD) of 0.56%.

FIG. 9 shows the results of measurement of consistency of pressing force measurement values between 36-channel sensors. The minimum measurement value is 2,887.1 kgf, the maximum measurement value is 3,053.1 kgf, and the average is 2,957.1 kgf, which means that the maximum deviation from the average (%RAD) is 3.24% and the relative standard deviation (%RSD) is 1.31%.

### (Example 4)

Durability of the electronic pressure sheet was experimentally determined. A single-cell durability experiment for pressing force used was performed. The pressing weight for durability verification was 10 kgf/cm². The weight for verifying the breakage before and after pressing was 15 kgf, the pressing time was 8 seconds, and the pause time was 1.7 seconds. The measurement target was 10,000 times, SFC 5813 was used as a measurement sensor, and one node was used. The pressed area was 1 cm².

Pressing was periodically performed with 10 kgf, and pressing was performed with 15 kgf in the period where a change due to drift during the pressing experiment with 10 kgf to verify damage.

FIG. 10 is a photograph showing the appearance change of the electronic pressure sheet before and after the pressure durability experiment.

In the photograph of the electronic pressure sheet before the experiment (a) and after the experiment (b), no special damage could be identified except for a slight depression.

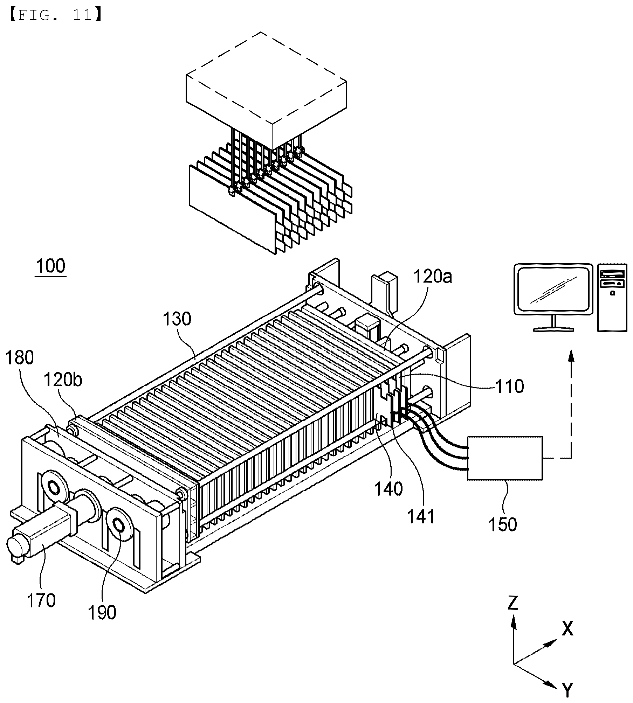

FIG. 11 is a view showing the configuration of a pressing apparatus for formation including a battery introduction unit according to a fourth embodiment of the present invention.

Batteries must be inserted between the pressing plates so as to be located at the same position.

Therefore, a battery introduction unit configured to equally grip a plurality of batteries and to position the batteries at the same position between the respective pressing plates is required.

The battery introduction unit may include a gripper configured to grip the battery, a moving portion configured to move the battery introduction unit, a power supply portion configured to provide power to the battery introduction unit, and a sensing portion configured to sense the position of the battery introduction unit and a pressing jig for formation.

The gripper may be in the form of gripping a single battery, and the gripper may be formed in one or more.

The sensing portion may be a vision sensor.

The position of the battery may be adjusted when positioning the battery between the pressing plates using pressing force information of the electronic pressure sheet.

Those skilled in the art to which the present invention pertains will appreciate that various applications and modifications are possible within the scope of the present invention based on the above description.

While the present invention has been described in detail above with reference to a representative embodiment, a person having ordinary skill in the art to which the present invention pertains will understand that various modifications are possible to the embodiment described above without departing from the scope of the invention.

Therefore, the scope of right of the present invention should not be limited to the embodiments described but should be defined by the appended claims and equivalents to the claims.

### (Description of Reference Symbols)

1: Battery
100: Pressing apparatus
110: Pressing plate
111: Main body
112: Silicone pad
120a: First main plate
120b: Second main plate
130: Driving shaft
140: Electronic pressure sheet
141: Data socket
150: Data acquisition (DAQ) unit
160: Central processing unit
170: Motor
180: Gearbox
190: Load cell
200: Battery introduction unit

## Claims

1. A pressing apparatus for secondary battery formation, the pressing apparatus comprising:
a plurality of pressing plates;
a first main plate and a second main plate disposed on outermost sides of the pressing plates, respectively, the first main plate and the second main plate being configured to press a battery received between the pressing plates;
a driving shaft fastening the first main plate and the second main plate to each other and configured to move the first main plate and the second main plate in an X direction; and
a thin-film type electronic pressure sheet located between the plurality of pressing plates.

2. The pressing apparatus according to claim 1, wherein each of the plurality of pressing plates comprises:
a main body having an area corresponding to a Y-direction and Z-direction area of the battery, wherein the area is configured to face a surface of the battery;
a silicone pad attached to an outer surface of the main body; and
the thin-film type electronic pressure sheet attached to an outer surface of the silicone pad.

3. The pressing apparatus according to claim 1, wherein each of the plurality of pressing plates comprises:
a main body having an area corresponding to a Y-direction and Z-direction area of the battery, wherein the area is configured to face a surface of the battery;
the silicone pad attached to an outer surface of the main body; and
an electronic pressure sheet attached to an outer surface of the silicone pad.

4. The pressing apparatus according to claim 2 or 3, wherein the pressing plate further comprises a heating pad configured to heat the battery.

5. The pressing apparatus according to claim 4, wherein the heating pad is formed on an outer surface of any one of the main body, the silicone pad, and the thin-film type electronic pressure sheet.

6. The pressing apparatus according to claim 1, wherein the plurality of pressing plates are arranged in the X direction and are configure to press or release the battery while moving in the X direction allowing a distance therebetween to decrease or increase.

7. The pressing apparatus according to claim 1, wherein
the thin-film type electronic pressure sheet is a plurality of thin-film type electronic pressure sheets,
and
the pressing apparatus comprises a data socket provided on one side of each of the plurality of thin-film type electronic pressure sheets, the data socket being configured to collect and transmit pressure information to a data acquisition (DAQ) unit.

8. The pressing apparatus according to claim 1, comprising a central processing unit configured to display a magnitude of a pressing force applied to the thin-film type electronic pressure sheet.

9. The pressing apparatus according to claim 1, comprising:
a motor configured to transmit a pressing force to the first main plate and the second main plate, the first main plate and the second main plate being interlocked to the driving shaft;
a gearbox connected to the driving shaft and the motor, the gearbox being configured to induce forward or reverse rotation of the driving shaft through rotation;
and
a load cell configured to perform pressing using force of the motor until the pressing force reaches a predetermined level.

10. The pressing apparatus according to claim 1, wherein
the battery is a plurality of batteries, and
the pressing apparatus comprises a battery introduction unit configured to grip the plurality of batteries and to dispose the plurality of batteries between the pressing plates.

11. A pressing force measurement method for batteries using the pressing apparatus according to any one of claims 1 to 10, the pressing force measurement method comprising:
a first step of attaching a plurality of thin-film type electronic pressure sheets to outer surfaces of a plurality of pressing plates, respectively;
a second step of disposing a plurality of batteries between the plurality of pressing plates;
a third step of pressing the plurality of the batteries while moving the first main plate and the second main plate in an X direction;
a fourth step of performing charging and discharging once while maintaining the third step; and
a fifth step of monitoring a pressing force applied to the thin-film type electronic pressure sheets in the fourth step, wherein
in the fifth step, a battery of the plurality of batteries different in the pressing force applied to the thin-film type electronic pressure sheets from other batteries of the plurality of batteries, is classified into a rework group.

12. The pressing force measurement method according to claim 1, wherein each of the pressing plates comprises:
a main body having an area corresponding to a Y-direction and Z-direction area of the battery, wherein the area is configured to face a surface of the battery;
a silicone pad attached to an outer surface of the main body; and
the thin-film type electronic pressure sheet attached to an outer surface of the silicone pad.
